Europäisches Patentamt

(19) European Patent Office

Office européen des brevets

(11) Publication number : **0 429 526 B1**

# (12) EUROPEAN PATENT SPECIFICATION

(45) Date of publication of patent specification :
04.11.92 Bulletin 92/45

(51) Int. Cl.$^5$ : **G01M 3/12**

(21) Application number : 89909784.4

(22) Date of filing : 17.08.89

(86) International application number :
PCT/GB89/00958

(87) International publication number :
WO 90/02323 08.03.90 Gazette 90/06

(54) METHOD AND APPARATUS FOR TESTING THE PERMEABILITY OF PLATES.

(30) Priority : 17.08.88 GB 8819560

(43) Date of publication of application :
05.06.91 Bulletin 91/23

(45) Publication of the grant of the patent :
04.11.92 Bulletin 92/45

(84) Designated Contracting States :
AT BE CH DE FR GB IT LI LU NL SE

(56) References cited :
US-A- 2 660 053
US-A- 4 002 055
Patent Abstracts of Japan, Vol. 10, No. 387,
P530, abstract of JP 61-175540

(73) Proprietor : **CO-OPERATIVE WHOLESALE
SOCIETY LIMITED
P.O. Box 53, New Century House
Manchester M60 4ES (GB)**

(72) Inventor : **EDWARDS, John, Norman
Penybryn Bryncroes
Pwllheli Gwynedd LL53 8EH (GB)**
Inventor : **TEMPLETON, Robert 15 Lavender
Avenue
Blythe Bridge
Staffordshire ST11 9RN (GB)**

(74) Representative : **Gallafent, Richard John
GALLAFENT & CO. 8 Staple Inn
London WCIV 7QH (GB)**

Jouve, 18, rue Saint-Denis, 75001 PARIS

## Description

This invention relates to the testing of plates and particularly to testing the permeability of plates.

Various technical fields are known in which an apparatus relies for its proper operation on the integrity and non-permeability of sheets or plates of material. Regrettably, in practice, plates are subject to a variety of influences, including mechanical stresses and corrosion, which can lead to a loss of integrity, leading in turn to unsatisfactory performance. One area of particular concern is that of plates used in-various food and drink processing apparatus. For example, in the dairy and brewing industry, plate packs are found in various types of equipment for effecting pasteurisation of milkand beer.

Not only can deterioration of such plates lead to a loss in performance efficiency, but more importantly, certain types of deterioration can lead to dangers to health. In particular, cracks, pinholes and the like can act as sites for contamination.

In the dairy industry, plate packs used for the pasteurisation of milk are regularly subject to inspection to ensure that they are free from pinhole and like defects. The carrying out of such checking procedures, which may be insisted on by some regulatory authorities, is time consuming and cumbersome by present methods. The known method is to coat one side of a plate with a dye solution and then to inspect the other side of the plate visually under an ultraviolet light source. If there is any defect, such as a pinhole, which will enable the dye solution to penetrate through the plate it does so under capillary action and the presence of dye spots on the other side of the plate can be visually detected, albeit only after the dye spot has grown to a certain size. Even if the plate passes this test, it must then be carefully cleaned before it can be put back into service.

We have now found that a simpler and more effective test system may be used, relying for its operation not on dye penetration through the plate, but on the passage of air through any defects, the basic idea being known from US-A-4 002 055, US-A-2 660 053 and JP-A-61175540.

According to a first feature of the present invention, there is provided a method of testing the integrity of a plate which comprises applying a coating of bubble-forming liquid to an area of one side of the plate to be tested, locating over that area a chamber having a transparent wall, the plate and chamber together constituting a sealed enclosure, reducing the pressure within the sealed enclosure, and visually observing the surface of the plate through the transparent wall of the chamber for the formation of bubbles on its surface, characterised in that the plate is first clamped to form the top of the chamber and the chamber is then rotated through 180° about a horizontal axis to enable viewing of the plate downwards through the transparent wall during testing.

Using this method, any defects in the plate, such as pinholes, become clearly and immediately apparent following evacuation, or partial evacuation, of the chamber by the formation of bubbles. By a suitable construction of the chamber and using suitable illumination, the presence or absence of bubbles can be clearly and unambiguously determined and appropriate action can then be taken. At the end of testing, the vacuum, or partial vacuum, may be released, the plate simply removed from the remainder of the chamber, washed or otherwise cleaned and, if sound, put back into service.

The bubble-forming solution may be a clear solution of an appropriate surface active agent in water. A wide variety of such is known and such materials are easily and inexpensively available and do not require the user to observe major safety precautions relating to their storage and use.

In accordance with a further feature of the present invention, there is provided a plate testing apparatus comprising a partial chamber having a transparent wall, sealing means at the edge of the partial chamber enabling the partial chamber, when assembled adjacent a plate, to form with the plate a sealed chamber, means for clamping a plate against the sealing areas, means for evacuating air from within the chamber, and characterised by plate testing apparatus comprising a partial chamber having a transparent wall, sealing means at the edge of the partial chamber enabling the partial chamber, when assembled adjacent a plate, to form with the plate a sealed chamber, means for clamping a plate against the sealing areas, and means for evacuating air from within the chamber characterised by the partial chamber being mounted in a framework by mountings enabling it to be rotated 180° about a horizontal axis.

The evacuation means may comprise a simple evacuation or vacuum pump. The requirements for such a pump are not stringent since, for the majority of applications, a relatively low vacuum will be more than sufficient to enable defects in the plate to be detected.

The precise nature and construction on the partial chamber may vary to suit the circumstances of use. For testing, dairy plates used in the pasteurisation of milk, a rectangular parallelipipedic chamber having a major transparent wall of methacrylate plastics and side and end walls of stainless steel is conveniently used. Such a partial chamber may be located in a suitable frame holder, and the partial chamber be provided with a plurality of clamps enabling a dairy plate to be held firmly against the partial chamber and constitute a major wall of the chamber opposite the transparent wall.

According to the invention the chamber is mounted so that it may be rotated to enable either the transparent wall or the wall constituted by the plate under test to be uppermost. This facilitates applying the plate to be tested to the chamber, since it can be lowered to seal on the chamber walls and there clamped in position, following which the chamber is rotated to bring the transparent wall uppermost for observation during testing.

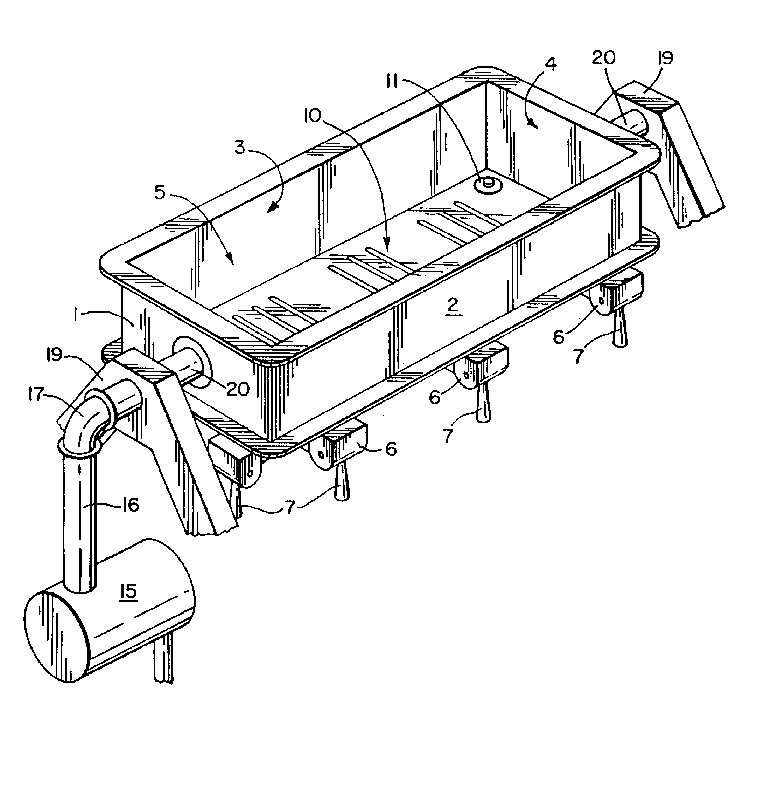

The invention is illustrated, by way of example, with reference to the accompanying drawing which shows in diagrammatic perspective view a dairy plate tester in accordance with the invention and for carrying out the method of the invention. Referring to this drawing, it should first be observed that most of the frame of the apparatus has been omitted for the sake of clarity. Rotatably mounted in upper members of the frame 19 by means of trunnions 20 is a box-like structure having stainless steel side walls 1, 2, 3 and 4 and a transparent wall 5. Located on the lower edges of walls 1 to 4 as shown in the drawing is a number of clamps 6 of known type, each having an actuating lever 7 which may be swung to enable a pasteurisation plate 10 to be introduced into the position shown, to close off the side of the chamber opposite transparent face 5. Located about the periphery of walls 1 to 4 is a sealing strip, not visible in the drawing, against which the plate is clamped.

Many dairy plates have large apertures in them which, for the purpose of testing, are sealed with a suitable bung and one of these is visible in the drawing and indicated at 11. Such sealing is effected as a preliminary step to plate testing.

In order to test a plate using the apparatus shown in the drawing, the chamber is first inverted, rotating about trunnions 20. The plate is then taken, any large holes sealed with bungs, and the surface of the plate then coated, e.g. by spraying with a bubble-forming solution, e.g. a soap solution. We have found that a very effective solution is made by diluting one part by volume of with ten parts by volume water.

The plate is then placed, coated side down, on to the edges of walls 1 to 4, and clamped in position by clamps 6. At this stage, the chamber is the other way up from that shown in the drawing.

The chamber is then subjected to vacuum by turning on a vacuum pump 15 which is connected via a pipe 16, swivel joint 17 and the interior of the lefthand trunnion 20 seen in the drawing to the interior of the sealed chamber so formed. Visual inspection of the plate through transparent wall 5 as the vacuum is applied, enables the formation and growth of any bubbles to be clearly seen.

Operating procedures may be standardised to ensure the reliable detection of pinholes. Experiments have shown that pinholes as small as 0.178 mm in size are clearly visible after 15 seconds following a reduction below atmospheric pressure of 0.25 to 0.3 Kg/cm². Typical dimensions for the chamber are 120 cm long by 36 cm wide and 21 cm deep but the specific dimensions will depend on the size of plates to be tested.

## Claims

1. Plate testing apparatus comprising a partial chamber having a transparent wall (5), sealing means at the edge of the partial chamber enabling the partial chamber, when assembled adjacent a plate (10), to form with the plate a sealed chamber, means (6) for clamping a plate against the sealing areas, and means (15) for evacuating air from within the chamber characterised by the partial chamber being mounted in a framework (19) by mountings (20) enabling it to be rotated 180° about a horizontal axis.

2. A method of testing the permeability of a plate (10) which comprises applying a coating of bubble-forming liquid to an area of one side of the plate to be tested, locating over that area a chamber having a transparent wall (5), the plate and chamber together constituting a sealed enclosure, reducing the pressure within the sealed enclosure, and visually observing the surface of the plate through the transparent wall of the chamber for the formation of bubbles on its surface, characterised in that the plate is first clamped to form the top of the chamber and the chamber is then rotated through 180° about a horizontal axis to enable viewing of the plate downwards through the transparent wall during testing.

## Patentansprüche

1. Plattentestvorrichtung mit einer Partialkammer, die eine transparente Wand (5), ein Dichtungsmittel am Rand der Partialkammer, das es der Partialkammer ermöglicht, wenn sie an der Platte (10) angebracht wird, zusammen mit der Platte eine dichte Kammer zu bilden, ein Mittel (6) zum Festklemmen einer Platte an den abgedichteten Bereichen, und ein Mittel (15) zum Evakuieren von Luft aus dem Inneren der Kammer, dadurch gekennzeichnet, daß die Partialkammer in einem Gestell (19) mittels Lagern (20) gelagert ist, die ihr eine Drehung um 180° um eine horizontale Achse ermöglichen.

2. Verfahren zum Testen der Permeabilität einer Platte (10), bei dem ein Überzug aus einer blasenbildenden Flüssigkeit in einem Bereich auf der einen Seite der zu testenden Platte aufgebracht wird, über diesem Bereich eine Kammer mit einer zusammen mit der Kammer einen dichten Verschluß bildenden transparenten Wand (5) angebracht wird, der Druck in dem dichten Verschluß reduziert wird und die Oberfläche der Platte durch die transparente Wand der Kammer hindurch auf die Bildung von Blasen auf ihrer Oberfläche visuell beobachtet wird, dadurch gekennzeichnet, daß die Platte zunächst festgeklemmt wird, so daß sie das Oberteil der Kammer bildet, und daß dann die Kammer um 180° um eine horizontale Achse gedreht wird, um das Betrachten der Platte nach unten durch die transparente Wand hindurch während des Testens zu ermöglichen.

## Revendications

1. Appareil pour éprouver des plaques, comprenant une chambre partielle ayant une paroi transparente (5), des moyens d'étanchéité sur le bord de la chambre partielle, permettant à cette dernière, lorsqu'elle est montée adjacente à une plaque (10) de former avec celle-ci une chambre fermée, des moyens (16) pour serrer une plaque contre les surfaces d'étanchéité, et des moyens (15) pour évacuer l'air de l'intérieur de la chambre, caractérisé en ce que la chambre partielle est montée dans un bâti (19) au moyen de supports (20) qui permettent de la tourner de 180° autour d'un axe horizontal.

2. Procédé pour éprouver la perméabilité d'une plaque (10), suivant lequel on applique un revêtement d'un liquide apte à former des bulles sur une région de l'une des faces de la plaque à éprouver, on positionne sur cette région une chambre ayant une paroi transparente (5), la plaque et la chambre constituant ensemble une enceinte fermée, on diminue la pression régnant à l'intérieur de l'enceinte fermée, et on observe visuellement la surface de la plaque à travers la paroi transparente de la chambre pour détecter la formation de bulles sur sa surface, caractérisé en ce qu'on serre tout d'abord la plaque afin de former la partie supérieure de la chambre, et en ce qu'on fait ensuite tourner ladite chambre de 180° autour d'un axe horizontal afin de permettre d'observer la plaque vers le bas à travers la paroi transparente au cours de l'épreuve.